Europäisches Patentamt

European Patent Office

Office européen des brevets

(11) Publication number: **0 487 163 A1**

# EUROPEAN PATENT APPLICATION

(21) Application number: **91203022.8**

(22) Date of filing: **20.11.91**

(51) Int. Cl.⁵: **F16K 47/08**

(30) Priority: **23.11.90 IT 2217590**

(43) Date of publication of application:
**27.05.92 Bulletin 92/22**

(84) Designated Contracting States:
**AT BE CH DE FR GB GR LI NL SE**

(71) Applicant: **NUOVOPIGNONE INDUSTRIE MECCANICHE E FONDERIA S.p.A.**
**Via F. Matteucci 2**

**I-50127 Florence(IT)**

(72) Inventor: **Aquilino, Gianfranco**
**Via Vigne Vecchi**
**I-71049 Trinitapoli (Foggia)(IT)**

(74) Representative: **Roggero, Sergio et al**
**Ing. Barzanò & Zanardo Milano S.p.A. Via Borgonuovo 10**
**I-20121 Milano(IT)**

(54) **Improved pressure reduction valve for gas.**

(57) A gas pressure reduction valve in which coaxial to the perforated valve cage (7) there are mounted several concentric cylindrical rings (20)-(23) having corresponding holes (24) of increasing diameter from the inner ring to the outer ring, said holes communicating with horizontal circumferential channels provided in the outer surface of said rings in correspondence with the circumferences along which said holes are provided, the holes of each ring being offset by one half of an angular pitch from the corresponding holes of the adjacent rings, the vertical fixed tubular seat (6) of the valve being covered with sound-absorbent material (15).

**Fig. 2**

This invention relates to a gas pressure reduction valve which, by using effective sound reduction means able to reduce the noise produced by the gas within the valve to a minimum level without penalizing the overall valve size, enables it to be used in environments which are not acoustically insulated, and even in pockets below the road surface or in proximity to civil habitations, as is currently necessary in gas distribution systems.

As is well known, when the pressure of a gas is reduced by its expansion, a corresponding increase in the gas velocity is inevitably produced as the resultant change in pressure energy is transformed into other forms of energy, usually gas kinetic energy. The greater the pressure drop between the upstream and downstream sides of the valve, the greater the gas velocity within the valve. A high gas velocity inevitably results in a disturbingly high noise level.

If the reduction stations of gas distribution systems are located far from residential centres, the noise level is of no great importance, but with the current need to locate such reduction stations in proximity to if not actually within residential centres the serious problem has arisen of maintaining the disturbing noise within acceptable limits.

In the current state of the art, said problem is effectively solved by using an acoustic hood of sound-absorbent glass wool material of a certain thickness, covering the outside of the reduction valve to be silenced.

Although this method provides effective silencing of any reduction valve, it involves a series of practical drawbacks in that the acoustic hood has to be removed each time maintenance or repair work has to be carried out on the valve, resulting in considerably costly time wastage, and that particular environmental conditions combined with possible gas leakages from the valve can trigger fires within the hood, as has already happened; in addition a considerable limitation is placed on its use in that because of its considerable overall size it cannot be located within pockets provided below the road surface or in proximity to residential buildings, as is currently necessary.

Because of the aforegoing there is therefore a current need to replace the acoustic hood with something which, by obviating the aforesaid drawbacks, enables the intrinsic disturbing noise of gas pressure reduction valves to be reduced to a tolerable level without severely penalizing the overall valve size.

In an attempt to achieve this, a valve has been provided in which the insulation is positioned not externally but internally, within the valve gas expansion chamber, in the form of a toroidal sheath of sound-absorbent material plus several internal coaxial felt layers which, on being struck by the gas flow threads, absorb their kinetic energy to hence attenuate the noise, the minor frequencies of which are drastically limited by rubber-covered tie bars positioned in proximity to the throttling orifice with their axes perpendicular to said orifice.

Although this latter known structure limits the valve size and noise, it still results in a considerable gas kinetic energy and hence a disturbing sound level which is much higher that that allowable for the direct installation of the valve in proximity to residential centres.

The object of the present invention is to overcome said drawbacks by providing a gas pressure reduction valve of small overall size which is able to reduce the disturbing noise caused by the gas to a minimum level such as to enable it to also be installed in proximity to residential buildings.

This is substantially attained in that most of the kinetic energy acquired by the gas following its pressure reduction is now converted into thermal energy by causing the fluid to pass along labyrinth paths which result in high localized pressure drops. In this manner the residual gas kinetic energy which is transformed into noise is minimal, this noise being further attenuated by insulating the entire gas expansion chamber with sound-absorbent material.

More specifically, coaxial and external to the vertical cylindrical cage, which is provided with equidistant holes along circumferences lying in parallel horizontal planes of the valve, there are mounted several concentric cylindrical rings one inside the other and provided, in positions corresponding with the cage holes, with holes communicating respectively with horizontal circumferential channels provided in the outer surface of said rings in correspondence with said circumferences along which said holes are provided; the cylindrical rings being positioned such that the holes of each ring are offset by one half of an angular pitch from the corresponding holes of the adjacent rings.

In this manner, by arranging the rings concentrically one against another, said holes and said channels form labyrinth paths through which the gas expands to lose most of its kinetic energy as localized pressure drops. In this respect, the gas leaving through the holes of the most inner cylindrical ring encounter the wall of the next ring to divide under expansion into two streams of opposite direction which travel along the relative circumferential channels to encounter the threads of gas from the adjacent holes of said most inner ring, with consequent dissipation of their kinetic energy into thermal energy; after this the gas enters the other holes of the next cylindrical ring and so on, continuing to expand and to dissipate its kinetic energy.

In this manner the kinetic energy fraction of the gas which is transformed into noise is truly minimized.

Again, as the gas increases its specific volume during its successive expansions through the various cylindrical rings, in order to maintain the gas discharge velocity constant said holes are formed with a diameter which increases from the inner ring to the outer ring, this diameter increase being such as to create a controlled gas diffusion effect, to prevent uncontrolled turbulence which could itself be a source of noise. In other words, the total hole areas of the individual cylindrical rings must correspond to the areas of the optimum theoretical diffusion cone.

Moreover, according to a further characteristic of the present invention the vertical fixed cylindrical tubular valve seat which delimits the expansion chamber is covered with sound-absorbent material to further attenuate the already low noise of the reduction valve.

Hence, the gas pressure reduction valve, comprising a valve body for the passage of gas from high to low pressure, said passage being intercepted by a vertical fixed cylindrical tubular seat rigid with a vertical cage provided with series of equidistant holes along circumferences lying in parallel horizontal planes, said series of holes being uncovered gradually and continuously by a piston slidable within said cage and controlled by actuator means mounted on the valve cap to open communication with a gas expansion chamber connected to the low pressure outlet of the valve and provided in its interior with a toroidal sheath of sound-absorbent material, is characterised according to the present invention in that several concentric cylindrical rings are mounted one inside the other coaxial and external to said vertical cylindrical cage, and are each provided with an equal-number series of holes which lie in positions corresponding with those of the cage, said holes having a diameter which increases from the inner ring to the outer ring in such a manner as to generate a controlled gas diffusion effect and communicating with horizontal circumferential channels provided in the outer surface of said rings in correspondence with said circumferences along which said holes are provided, said rings being positioned such that the series of holes of each ring are offset by one half of an angular pitch from the corresponding series of holes of the adjacent rings, said vertical fixed cylindrical tubular seat also being covered with sound-absorbent material.

The invention will be more apparent with reference to the accompanying drawings which illustrate a preferred embodiment thereof by way of non-limiting example in that technical or constructional modifications can be made thereto but without leaving the scope of the present invention.

In said drawings:

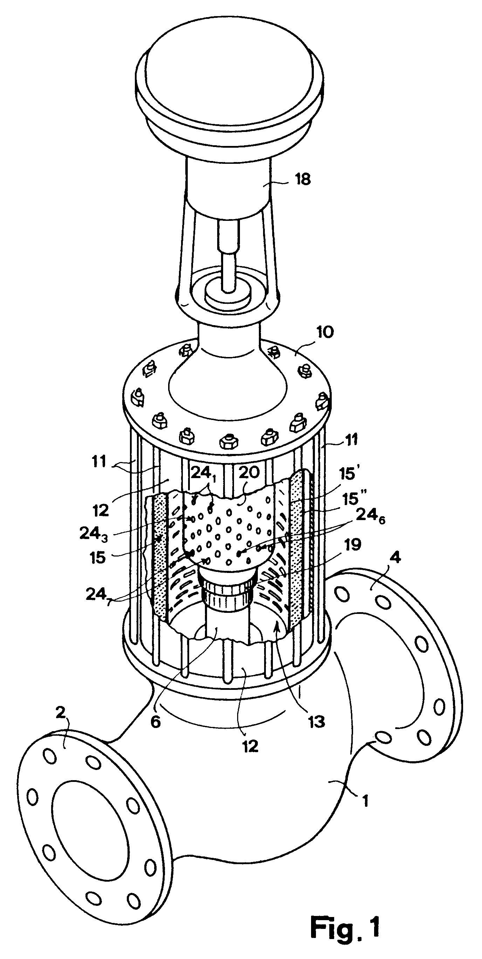

Figure 1 is a partly sectional view of a gas pressure reduction valve constructed in accordance with the invention;

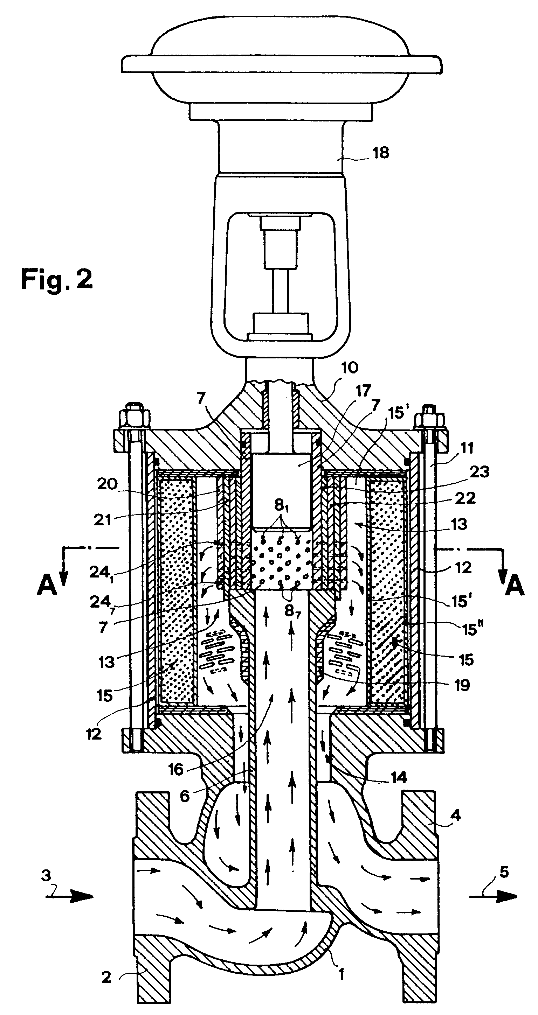

Figure 2 is a longitudinal section through the valve of Figure 1 to an enlarged scale;

Figure 3 is a section on the line AA of Figure 2;

Figure 4 is a very enlarged longitudinal section through a part of the valve of Figure 2.

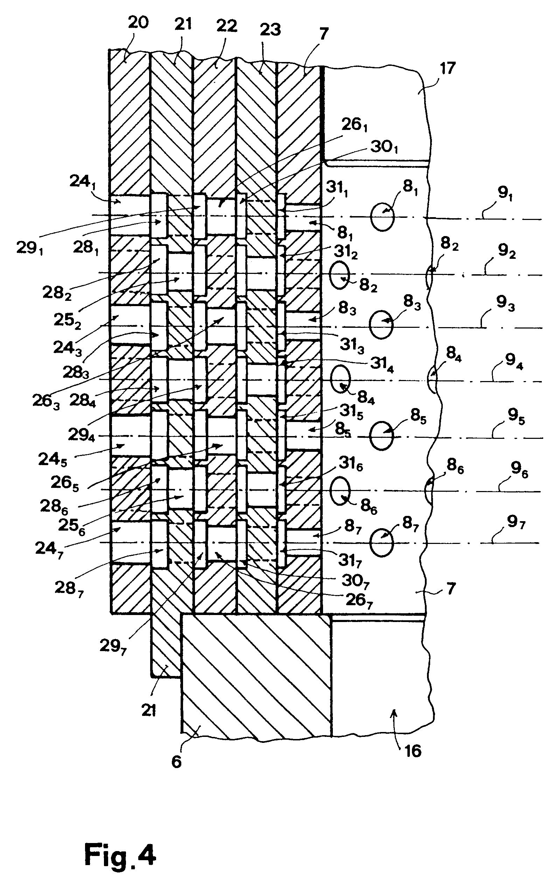

In the figures, the reference numeral 1 indicates the valve body of a gas pressure reduction valve, which comprises a flanged inlet port 2 through which the gas 3 enters at high pressure, a flanged outlet port 4 for discharge of the gas 5 at low pressure, and a vertical fixed cylindrical tubular seat 6 which intercepts the gas passage from high to low pressure. On said tubular seat 6 there is fixed a vertical cylindrical cage 7 provided with series of equidistant holes $8_1$, $8_2$...., $8_7$ provided along cage circumferences lying in parallel horizontal planes $9_1$, $9_2$...., $9_7$ (see specifically Figure 4). Said cage 7 is retained in position by the valve cap 10 which, by means of bolted tie rods 11, also retains in position the cylindrical member 12 the interior of which defines the gas expansion chamber 13 which is connected by the duct 14 to the flanged outlet port 4 of the valve. Said expansion chamber 13 is provided in its interior with a toroidal sheath of sound-absorbent material 15 consisting substantially of two perforated cylindrical foils, 15' and 15'' respectively, sandwiching between them sound-absorbent material such as glass wool, and communicates with the high pressure duct 16 defined by the tubular seat 6 via said series of holes $8_1$,..., $8_7$ of the cage 7, which are uncovered gradually and continuously by a piston 17 slidable within said cage 7 and controlled by an actuator 18 mounted on the valve cap 10. That part of said vertical fixed cylindrical tubular seat 6 contained in the expansion chamber 13 is covered with sound-absorbent material 19, and several cylindrical rings 20, 21, 22 and 23 respectively are mounted concentrically one inside the other coaxial and external to said perforated cylindrical cage, they being each provided with a series of holes $24_i$, $25_i$, $26_i$ and $27_i$ where i varies from 1 to 7, in equal number to the holes $8_i$ of the cage 7 and arranged to correspond to these latter, ie along circumferences lying in said parallel horizontal planes $9_i$ (see specifically Figure 4). Said series of holes have diameters which increase from the inner ring 23 to the outer ring 20, ie the holes $27_i$ are of smaller diameter than the holes $26_i$ and these are smaller than the holes $25_i$, which are of smaller diameter than the holes $24_i$, as can be clearly seen in Figure 4, such as to generate a controlled gas diffusion effect, ie the total areas of the holes $24_i$, $25_i$, $26_i$ and $27_i$ must correspond to the areas of normal sections of a theoretical diffusion cone. The series of holes $8_i$ and $25_i$, $26_i$, $27_i$ communicate respectively with horizontal circumferential channels $31_i$ and $28_i$, $29_i$, $30_i$ provided in the outer surface of the cage 7 and of the rings 21, 22 and 23 respectively in correspondence with said circumferences lying in parallel horizontal planes $9_i$.

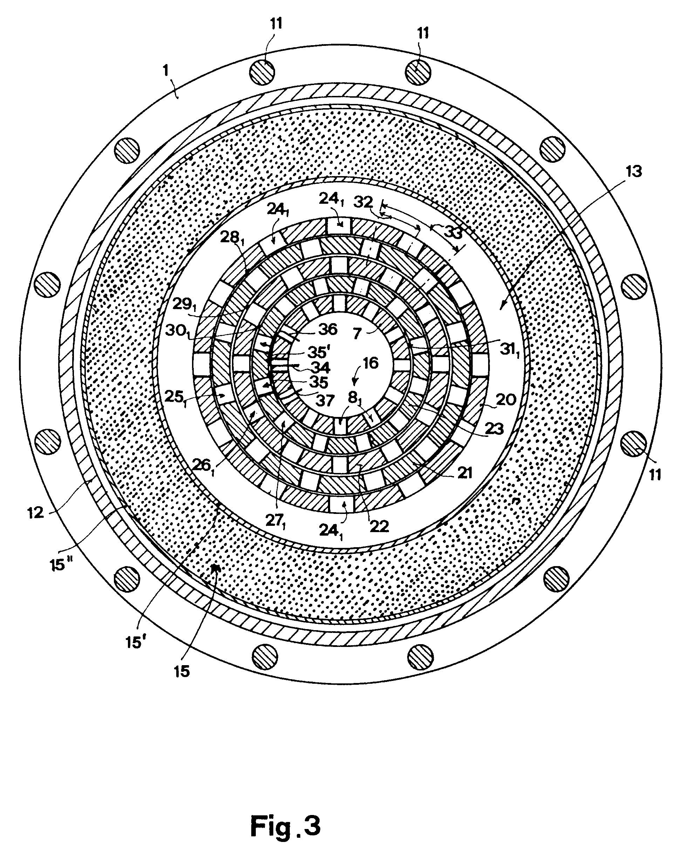

Finally, said cylindrical rings 20, 21, 22 and 23 are mounted coaxial to said perforated cylindrical cage 7 such that the series of equidistant holes $24_i$, $25_i$, $26_i$ and $27_i$ of each ring are offset by one half of an angular pitch 32 (see Figure 3) from the corresponding series of holes of the adjacent rings, the angular pitch 33 meaning the angular distance between two adjacent holes of the same series. In this manner the gas 34 leaving for example the hole $8_1$ of the cage 7 (see Figure 3) is divided into two jets 35 and 35' travelling in opposite directions in the channel $31_1$, said jets encountering the gas threads 36 and 37 respectively which are travelling in the opposite direction, so losing kinetic energy, to then enter the holes $27_1$ of the ring 23 and so on.

## Claims

1.  A gas pressure reduction valve, comprising a valve body for the passage of gas from high to low pressure, said passage being intercepted by a vertical fixed cylindrical tubular seat rigid with a vertical cage provided with series of equidistant holes along circumferences lying in parallel horizontal planes, said series of holes being uncovered gradually and continuously by a piston slidable within said cage and controlled by actuator means mounted on the valve cap to open communication with a gas expansion chamber connected to the low pressure outlet of the valve and provided in its interior with a toroidal sheath of sound-absorbent material, characterised in that several concentric cylindrical rings are mounted one inside the other coaxial and external to said vertical cylindrical cage, and are each provided with an equal-number series of holes which lie in positions corresponding with those of said cage, said holes having a diameter which increases from the inner ring to the outer ring in such a manner as to generate a controlled gas diffusion effect and communicating with horizontal circumferential channels provided in the outer surface of said rings in correspondence with said circumferences along which said holes are provided, said rings being positioned such that the series of holes of each ring are offset by one half of an angular pitch from the corresponding series of holes of the adjacent rings, said vertical fixed cylindrical tubular seat also being covered with sound-absorbent material.

**Fig. 1**

**Fig. 2**

**Fig.3**

EP 0 487 163 A1

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WO-A-8 503 557 (VALTEK INC.) <br> * abstract; figures 1,2 * <br> --- | 1 | F16K47/08 |
| X | GB-A-1 569 261 (NEWTON) <br> * page 1, line 37 - line 55; figures 1,2 * <br> --- | 1 | |
| X | FR-A-2 293 646 (NUOVO PIGNONE) <br> * page 2, line 26 - page 3, line 30; figures 7-11 * <br> --- | 1 | |
| A | DE-A-2 402 774 (LEIBNITZ) <br> * page 7, paragraph 2; figure * <br> ----- | 1 | |
| | | | TECHNICAL FIELDS SEARCHED (Int. Cl.5 ) <br><br> F16K |

The present search report has been drawn up for all claims

| Place of search | Date of completion of the search | Examiner |
|---|---|---|
| THE HAGUE | 06 FEBRUARY 1992 | CHRISTENSEN J.T. |